# EUROPEAN PATENT SPECIFICATION

(11) **EP 4 206 306 B1**
(45) Date of publication and mention of the grant of the patent: **18.02.2026**
(21) Application number: 22217215.7
(22) Date of filing: 29.12.2022
(51) Int. Cl.: C10B 53/07, B29B 17/00, C08J 11/12, C08J 11/16, C10B 7/10

(54) **THERMO-MECHANICAL DEPOLYMERIZATION PLANT AND METHOD**
THERMO-MECHANISCHE DEPOLYMERISATIONSANLAGE UND -VERFAHREN
INSTALLATION ET MÉTHODE DE DÉPOLYMÉRISATION THERMOMÉCANIQUE

(30) Priority: 29.12.2021 IT 202100032999
(43) Date of publication of application: 05.07.2023
(73) Proprietor: ECO Circular S.r.l., 29015 Castel San Giovanni (PC) (IT)
(72) Inventor: STRAGLIATI, Alessandro, 29015 Castel San Giovanni (PC) (IT)
(74) Representative: Hoffmann Eitle

(56) References cited:
- EP-A1- 3 048 161
- WO-A2-2017/042598
- GB-A- 2 590 061
- US-A1- 2017 232 416

## Description

The present invention relates to a thermo-mechanical depolymerization plant, preferably for the thermo-mechanical depolymerization of shredded tyres, and/or of automotive shredder residues, and/or of plastic materials of another type.

The treads of tyres for road vehicles are consumed due to the friction, making the treads progressively smooth. Furthermore, the tyres are subject to punctures that cannot be repaired at times. A smooth or damaged tread creates evident road safety problems, especially in the event of rain, snow or slippery ground. It is therefore good practice to periodically replace the tyres.

An irresponsible disposal of worn-out tyres - by abandoning or burning them - is one of the main sources of atmospheric and environmental pollution. Furthermore, simply burning worn-out tyres in an incinerator or using them as solid recovered fuels (SRFs; mentioned by way of example), is neither acceptable nor sustainable as a solution any more in a period of transition towards a circular economy.

Documents EP 3 048 161 A1 and WO 2017/042598 A2 each describe a thermo-mechanical depolymerisation plant in which a polymer mixture is decomposed in a thermomechanical reactor under anoxic conditions, and in which the plant is controlled according to process parameters such as temperature, power consumption and oxygen content.

Following a long and intense research and development activity, the Applicant developed a thermo-mechanical depolymerization plant capable of providing an appropriate response to the existing limits, drawbacks and problems.

Therefore, forming an object of the present invention is a thermo-mechanical depolymerization plant having the characteristics as defined in claim 1 and a method for thermo-mechanical depolymerization as defined in claim 7.

Preferred embodiments are described in the respective dependent claims.

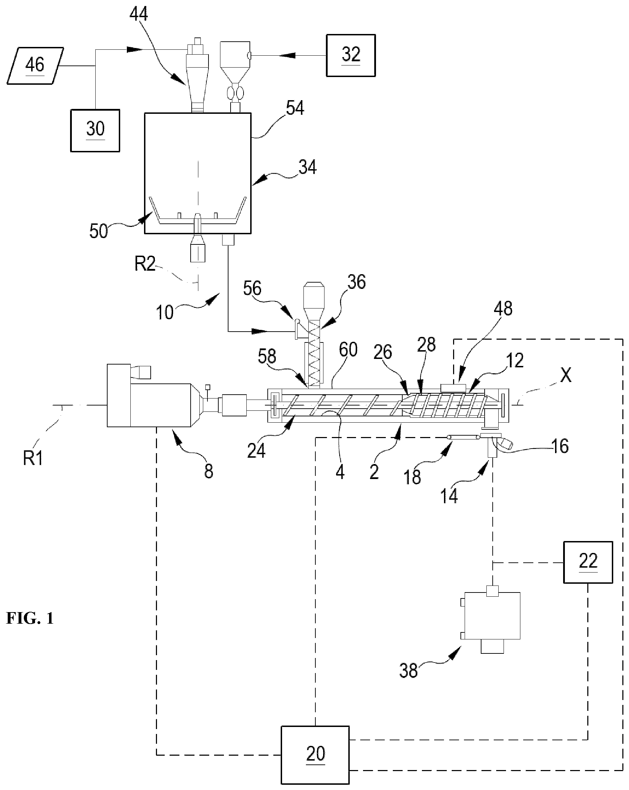

Preferred embodiments of the present invention will be described hereinafter by way of non-limiting example, with reference to Figure 1 which shows a schematic view of a thermo-mechanical depolymerization plant, subject of the present invention, according to a possible embodiment.

Therefore, forming an object of the present invention is a thermo-mechanical depolymerization plant 1 comprising feeding means 10 of a polymeric mixture in particulate and/or granule form, at least one cylinder 2, at least one auger 6, drive means 8, at least one opening 14 for discharging depolymerization products, interception means 16, movement means 18, detection means 22, and management and control means 20.

In this description, the expression "polymeric mixture" is used to indicate polymeric materials of different type, or a mixture of at least one polymeric material with another non-polymeric material.

Said particulate and/or said granules preferably comprise or consist of shredded tyres and/or automotive shredder residues (ASRs). Despite this, other embodiments provide for the possibility of treating polymeric mixtures of other plastic materials (for example vulcanised rubber, elastomers, thermoplastics or the like) in the present thermo-mechanical depolymerization plant 1.

Preferably, said polymeric mixture in particulate and/or granule form comprises particulate or granules with an average size distribution comprised from 0.5 mm to 15 mm, preferably comprised from 1 mm to 10 mm, more preferably comprised from 2 mm to 5 mm. By way of example, said average size distribution could be determined by sieving or screening.

Said polymeric mixture preferably comprises a polymeric material (for example shredded tyres and/or ASRs) and an inorganic filler.

The inorganic filler preferably comprises or consists of at least one zeolite in powdered form. Said zeolite - if present - also acts as an anti-caking agent for said polymeric mixture and furthermore as an agent for absorbing a residual moisture possibly present in the polymeric mixture.

The inorganic filler (preferably a zeolite) is preferably present in an amount comprised from 0.1% to 10% by weight with respect to the total weight of said polymeric mixture, more preferably comprised from 0.2% to 5% by weight, even more preferably comprised from 0.5% to 3% by weight.

The means 10 for feeding the polymeric mixture preferably comprise:
(i) a first container 30 for the polymeric material;
(ii) a second container 32 for the inorganic filler;
(iii) a mixer 34 for said polymeric material and said inorganic filler to obtain said polymeric mixture, wherein said mixer is fluidically connected to said first container 30 and said second container 32;
(iv) conveying means 36, preferably of mechanical type, of the polymeric mixture from said mixer 34 to the annular gap 12 (described below).

Preferably, the thermo-mechanical depolymerization plant 1 comprises a pump or a turbine 46 for moving the polymeric material from the first container 30 to the mixer 34. More preferably, the thermo-mechanical depolymerization plant 1 comprises a cyclone 44 arranged fluidically downstream of said pump or turbine 46 and upstream of said mixer 34. Preferably, said pump or turbine 46 is arranged fluidically downstream with respect to the first container 30.

Preferably, the second container 32 is mounted vertically above the mixer 34, so that the inorganic filler can flow into the mixer 34 due to the force of gravity. In this regard, an outlet of the second container 32 is preferably provided with means for metering the inorganic filler, so that the metered amount of inorganic filler can flow into the mixer 34.

A rotary mixer 50, rotatable about a (preferably vertical) second rotation axis R2 with respect to a mixing casing 54, is preferably mounted in the mixer 34.

The conveying means 36 preferably comprise at least one auger-like system. Said auger-like system comprises an inlet 56 connected to the mixer 34 and an outlet 58 which terminates in the cylinder 2.

Preferably, the conveying means 36 provide for depriving the polymeric mixture of the oxygen and moisture contained therein. Preferably, the conveying means (preferably the auger-like system) 36 are fluidically connected with a vacuum system to remove oxygen and moisture from the polymeric mixture.

The at least one cylinder 2 extends about a longitudinal axis X to delimit a cylinder compartment 4. The longitudinal axis X is preferably a horizontal axis. Oxygen is substantially absent from the cylinder compartment 4 (anoxic conditions).

The thermo-mechanical depolymerization plant 1 optionally comprises first heating means 48 connected to the cylinder 2 and in thermal contact with the cylinder compartment 4. Preferably, the first heating means 48 are fixed to an outer surface 60 of the cylinder 2.

The first heating means 48 preferably comprise at least one electric resistor.

The first heating means 48 are preferably operatively connected to the management and control means 20 (described below).

The at least one auger 6 is rotatably received in the cylinder compartment 4 and it is mounted with its rotation axis R1 coaxially to the longitudinal axis X.

The polymeric mixture is displaced in the annular gap 12 toward the discharge opening 14 by rotating the auger 6 with respect to the cylinder 2. In this regard, the drive means 8 provide for the movement of the auger 6 about the rotation axis R1 with an adjustable (i.e. variable) angular speed.

The auger 6 preferably comprises a proximal section 24, an intermediate section 26 and a distal section 28, axially adjacent along the longitudinal axis X.

The cylinder 2 and the auger 6 delimit between them an annular gap 12. In the annular gap 12, the polymeric mixture is subjected to thermo-mechanical depolymerization through thermo-mechanical stresses in the absence of oxygen to obtain depolymerization products. The depolymerization products comprise solid products (for example carbon black, and optionally an inorganic filler, and optionally metal fragments deriving from tyre shredding), liquid products and/or gaseous products in variable amounts. Given that thermo-mechanical depolymerization is a process carried out in the absence of oxygen, there is no oxygen in the cylinder 2 (anoxic conditions). Therefore, there is no combustion in the annular gap 12.

Said thermo-mechanical stresses are mainly generated by the friction forces which develop through the thrust action (and therefore the pressure) exerted by the auger on the polymeric mixture, which forces the particulates and/or the granules into and along the annular gap 12. Optionally, the thermo-mechanical stresses may be increased by acting through the first heating means 48, which can be controlled as needed to heat the cylinder compartment 4. By way of example, the first heating means 48 may be used in a start-up stage of the plant, until the plant reaches its operating temperature solely under the action of the thermo-mechanical stresses.

Generally, the polymeric mixture comprises polymers with a higher average molecular weight, while the depolymerization products comprise thermodynamically decomposed or fragmented polymers with a smaller average molecular weight with respect to the average molecular weight of the polymeric material or plurality thereof contained in the polymeric mixture.

A first passage section of the annular gap 12 at the proximal section 24 is greater than a second passage section of the annular gap 12 at the distal section 28. The intermediate section 26 is preferably of truncated-conical shape tapered towards the proximal section 24, so as to reduce the passage section at the distal section 28.

In other words, the annular gap 12 undergoes a reduction of its passage section from the proximal section 24 to the distal section 28, wherein the intermediate section 26 provides the transition from the first passage section to the second passage section. In such transition, the thermo-mechanical stresses, the friction forces, and hence the exerted pressure, and the temperature of the polymeric mixture increase.

According to the invention, the pitch of the auger 6 at the distal section 28 is smaller than the pitch of the auger 6 at the proximal section 24.

The interception means 16 intercept the depolymerization products exiting from the annular gap 12 through the discharge opening 14. Preferably, the interception means 16 are arranged at the discharge opening 14.

The interception means 16 comprise at least one movable shutter for adjusting a product-passage section through the interception means 16. Said movable shutter is preferably substantially conical or truncated-conical.

The movement means 18 move said movable shutter. The movement means 18 are preferably selected from a linear actuator and a rotary actuator.

The detection means 22 are configured to detect the amounts of solid, liquid and/or gaseous products exiting from the annular gap 12.

The detection means 22 of the amounts of solid, liquid and/or gaseous products preferably comprise or consist of:
- one or more detectors of the weight of the solid products; and/or
- one or more detectors of the volume, flow and/or density of the liquid products; and/or
- one or more detectors of the flow and/or pressure of the gaseous products; and/or
- optionally at least one gas chromatographic detector for determining a composition of said liquid products and/or of said gaseous products; and/or
- optionally at least one or more detectors of the temperature of said polymeric mixture and/or said solid, liquid and/or gaseous products. The presence of one or more temperature detectors is preferred given that volume is a parameter that is variable as a function of the temperature.

The management and control means 20 are operatively connected to the drive means 8, to the movement means 18 and to the detection means 22 so as to send adjustment signals to said drive means 8 and/or to said movement means 18 to adjust said angular speed and/or said product-passage section depending on the detection signals - received by the detection means 22 - based on actually detected amounts of solid, liquid and/or gaseous products.

In other words, the angular speed and/or the product-passage section may be adjusted or controlled based on the actual amounts of solid, liquid and/or gaseous products. In this way, the present thermo-mechanical depolymerization plant allows to act on the process parameters to increase - by way of example - the amount of liquid (or gaseous) products with respect to the amount of solid products.

The management and control means 20 preferably comprise at least one programmable logic controller (PLC).

Preferably, the management and control means 20 are also operatively connected to the first heating means 48 so as to send adjustment signals to said first heating means 48 depending on the detection signals - received by the detection means 22 - based on actually detected amounts of said solid, liquid and/or gaseous products.

Preferably, said adjustment signals sent by the management and control means 20 to the drive means 8 and to the movement means 18 are coordinated so that said product-passage section is increased or decreased in a manner proportional or corresponding to an increase or to a decrease of said angular speed, respectively.

Preferably, the thermo-mechanical depolymerization plant comprises a separation device 38 of the solid products, liquid products and gaseous products.

Advantageously, the plant subject of the present invention is built according to the criteria of Industry 4.0.

Advantageously, the plant subject of the present invention can be safely controlled from a remote position.

With respect to embodiments of the aforementioned thermo-mechanical depolymerization plant, a person skilled in the art could replace or modify the described characteristics depending on requirements. These embodiments are also to be considered included in the scope of protection formalised in the following claims. Furthermore, it should be observed that any embodiment may be implemented independently from the other embodiments described.

### LIST OF REFERENCE NUMERALS

- 1: thermo-mechanical depolymerization plant
- 2: cylinder
- 4: cylinder compartment
- 6: auger
- 8: drive means
- 10: feeding means
- 12: annular gap
- 14: discharge opening
- 16: interception means
- 18: movement means
- 20: management and control means
- 22: detection means
- 24: proximal section of the auger
- 26: intermediate section of the auger
- 28: distal section of the auger
- 30: first container
- 32: second container
- 34: mixer
- 36: conveying means, preferably auger-like system
- 38: separator device
- 44: cyclone
- 46: pump or turbine
- 48: first heating means
- 50: rotary mixer
- 54: mixing casing
- 56: inlet of the auger-like system
- 58: exit of the auger-like system
- 60: outer surface of the cylinder
- R1: rotation axis of the auger
- R2: rotation axis of the rotary mixer
- X: longitudinal axis

## Claims

1. A thermo-mechanical depolymerization plant (1) comprising:
- feeding means (10) of a polymeric mixture in particulate and/or granule form;
- at least one cylinder (2) extending about a longitudinal axis (X) to delimit a cylinder compartment (4);
- at least one auger (6), rotatably received in the cylinder compartment (4) and mounted with a rotation axis (R1) thereof coaxially to the longitudinal axis (X);
- drive means (8) for driving said auger (6) around said rotation axis (R1) with an adjustable angular speed;
wherein said cylinder (2) and said auger (6) delimit, between each other, an annular gap (12) in which said polymeric mixture is subjected to depolymerization through thermo-mechanical stresses in the absence of oxygen to obtain depolymerization products, wherein said depolymerization products comprise solid, liquid and/or gaseous products in variable amounts;
- at least one discharge opening (14) of said depolymerization products;
- interception means (16) of said depolymerization products exiting from said discharge opening (14); wherein said interception means (16) comprise at least one movable shutter for adjusting a product-passage section through said interception means (16);
- movement means (18) of said movable shutter;
- detection means (22) of amounts of solid, liquid and/or gaseous products exiting from the annular gap (12);
- management and control means (20) operatively connected to said drive means (8), said movement means (18) and said detection means (22) so as to send adjustment signals to:
(i) said drive means (8); and/or
(ii) said movement means (18);
to adjust said angular speed and/or said product-passage section according to detection signals received by the detection means (22) based on actually detected amounts of said solid, liquid and/or gaseous products;
wherein the pitch of the auger (6) at the distal section (28) is smaller than the pitch of the auger (6) at the proximal section (24).

2. The thermo-mechanical depolymerization plant (1) according to the preceding claim, wherein said adjustment signals sent by the management and control means (20) to the drive means (8) and the movement means (18) are coordinated so that said product-passage section is increased or decreased in a manner corresponding or proportional to an increase or decrease in said angular speed, respectively.

3. The thermo-mechanical depolymerization plant (1) according to any one of the preceding claims, wherein said detection means (22) of the amount of solid, liquid and/or gaseous products comprise or consist of:
- one or more detectors of the weight of the solid products; and/or
- one or more detectors of the volume, flow and/or density of the liquid products; and/or
- one or more detectors of the flow and/or pressure of the gaseous products; and/or
- optionally at least one gas chromatographic detector; and/or
- optionally at least one or more detectors of the temperature of said polymeric mixture and/or said solid, liquid and/or gaseous products.

4. The thermo-mechanical depolymerization plant (1) according to any one of the preceding claims, wherein said auger (6) comprises a proximal section (24), an intermediate section (26) and a distal section (28), axially adjacent along the longitudinal axis (X), wherein a first passage section of the annular gap (12) at the proximal section (24) is greater than a second passage section of the annular gap (12) at the distal section (28), and wherein the intermediate section (26) is of truncated-conical shape tapered towards the proximal section (24).

5. The thermo-mechanical depolymerization plant (1) according to any one of the preceding claims, wherein said feeding means (10) of the polymeric mixture comprise:
(i) a first container (30) for a polymeric material;
(ii) a second container (32) for an inorganic filler;
(iii) a mixer (34) for said polymeric material and said inorganic filler to obtain said polymeric mixture, said mixer being fluidically connected to said first container (30) and said second container (32);
(iv) conveying means (36), preferably of mechanical type, of the polymeric mixture from said mixer (34) to the annular gap (12).

6. The thermo-mechanical depolymerization plant (1) according to any one of the preceding claims, wherein said movable shutter has a substantially conical or truncated-conical shape.

7. Method for thermo-mechanical depolymerization using a thermo-mechanical depolymerization plant (1) according to any one of the preceding claims, comprising the steps of:
- feeding a polymeric mixture in particulate and/or granule form to the at least one cylinder (2);
- rotating the at least one auger (6) using the drive means (8) at an adjustable angular speed;
- subjecting the polymeric mixture to depolymerization through thermo-mechanical stresses in the absence of oxygen in the annular gap (12) to obtain depolymerization products, wherein said depolymerization products comprise solid, liquid and/or gaseous products in variable amounts;
- discharging said depolymerization products through the discharge opening (14);
- adjusting the product-passage section through the interception means (16) through a movable shutter moved by the movement means (18);
- detecting the amounts of solid, liquid and/or gaseous products exiting from the annular gap (12);
- managing and controlling of the drive means (8) and of the movement means (18) by sending adjustment signals to said drive means (8) and/or said movement means (18);
- adjusting the angular speed and/or the product-passage section according to detection signals received by the detection means (22) based on actually detected amounts of said solid, liquid and/or gaseous products.

8. The thermo-mechanical depolymerization method according to the preceding claim, wherein said polymeric mixture comprises a polymeric material and an inorganic filler, and said inorganic filler comprises or consists of a zeolite in powdered form, wherein said zeolite further acts as an anti-caking agent for said polymeric mixture.

9. The thermo-mechanical depolymerization method according to claim 7 or 8, wherein said inorganic filler is present in an amount comprised from 0.1% to 10% by weight with respect to the total weight of said polymeric mixture, preferably comprised from 0.2% to 5% by weight, more preferably comprised from 0.5% to 3% by weight.

10. The thermo-mechanical depolymerization method according to any one of claims 7 to 9, wherein said polymeric mixture in particulate and/or granule form comprises particulate and/or granules with an average size distribution comprised from 0.5 mm to 15 mm, preferably comprised from 1 mm to 10 mm, more preferably comprised from 2 mm to 5 mm.

11. The thermo-mechanical depolymerization method according to any one of claims 7 to 10, wherein said particulate and/or said granules comprise or consist of:
- shredded tyres; and/or
- automotive shredder residues (ASRs).

## Patentansprüche

1. Thermo-mechanische Depolymerisationsanlage (1), umfassend:
- Zuführmittel (10) für ein Polymergemisch in Partikel- und/oder Granulatform;
- mindestens einen Zylinder (2), der sich um eine Längsachse (X) erstreckt, um einen Zylinderraum (4) zu begrenzen;
- mindestens eine Förderschnecke (6), die drehbar in dem Zylinderraum (4) aufgenommen ist und mit einer Drehachse (R1) derselben koaxial zu der Längsachse (X) montiert ist;
- Antriebsmittel (8) zum Antreiben der Förderschnecke (6) um die Drehachse (R1) mit einer einstellbaren Winkelgeschwindigkeit;
wobei der Zylinder (2) und die Förderschnecke (6) zwischen sich einen Ringspalt (12) begrenzen, in dem das Polymergemisch durch thermomechanische Beanspruchungen in Abwesenheit von Sauerstoff einer Depolymerisation unterzogen wird, um Depolymerisationsprodukte zu erhalten, wobei die Depolymerisationsprodukte feste, flüssige und/oder gasförmige Produkte in variablen Mengen umfassen;
- mindestens eine Auslassöffnung (14) der Depolymerisationsprodukte;
- Abfangemittel (16) der Depolymerisationsprodukte, die aus der Auslassöffnung (14) austreten; wobei die Abfangemittel (16) mindestens einen beweglichen Schieber zum Einstellen eines Produktdurchtrittsquerschnitts durch die Abfangemittel (16) umfasst;
- Bewegungsmittel (18) des beweglichen Schiebers;
- Erkennungsmittel (22) für Mengen von festen, flüssigen und/oder gasförmigen Produkten, die aus dem Ringspalt (12) austreten;
- Verwaltungs- und Steuermittel (20), die mit den Antriebsmitteln (8),
den Bewegungsmitteln (18) und den Erkennungsmitteln (22) wirkverbunden sind, um Einstellsignale zu senden an:
(i) die Antriebsmittel (8); und/oder,
(ii) die Bewegungsmittel (18);
um die Winkelgeschwindigkeit und/oder den Produktdurchtrittsquerschnitt entsprechend Detektionssignalen einzustellen, die von den Erkennungsmitteln (22) empfangen werden, basierend auf tatsächlich erfassten Mengen der festen, flüssigen und/oder gasförmigen Produkte;
wobei die Steigung der Förderschnecke (6) an dem distalen Abschnitt (28) kleiner ist als die Steigung der Förderschnecke (6) an dem proximalen Abschnitt (24).

2. Thermo-mechanische Depolymerisationsanlage (1) nach dem vorstehenden Anspruch, wobei die Einstellsignale, die von der Verwaltungs- und Steuermittel (20) an die Antriebsmittel (8) und die Bewegungsmittel (18) gesendet werden, so koordiniert sind, dass der Produktdurchtrittsquerschnitt in einer Weise vergrößert oder verringert wird, die jeweils einer Erhöhung oder Verringerung der Winkelgeschwindigkeit entspricht oder proportional dazu ist.

3. Thermo-mechanische Depolymerisationsanlage (1) nach einem der vorstehenden Ansprüche, wobei die Erkennungsmittel (22) für die Menge fester, flüssiger und/oder gasförmiger Produkte Folgendes umfassen oder daraus bestehen:
- einen oder mehrere Detektoren für das Gewicht der festen Produkte; und/oder
- einen oder mehrere Detektoren für das Volumen, den Durchfluss und/oder die Dichte der flüssigen Produkte; und/oder
- einen oder mehrere Detektoren für den Durchfluss und/oder den Druck der gasförmigen Produkte; und/oder
- wahlweise mindestens einen gaschromatografischen Detektor; und/oder
- wahlweise mindestens einen oder mehrere Detektoren für die Temperatur des Polymergemischs und/oder der festen, flüssigen und/oder gasförmigen Produkte.

4. Thermo-mechanische Depolymerisationsanlage (1) nach einem der vorstehenden Ansprüche, wobei die Förderschnecke (6) einen proximalen Abschnitt (24), einen Zwischenabschnitt (26) und einen distalen Abschnitt (28) umfasst, die entlang der Längsachse (X) axial aneinander angrenzen, wobei ein erster Durchtrittsquerschnitt des Ringspalts (12) an dem proximalen Abschnitt (24) größer ist als ein zweiter Durchtrittsquerschnitt des Ringspalts (12) an dem distalen Abschnitt (28), und wobei der Zwischenabschnitt (26) kegelstumpfförmig ausgebildet ist und sich zum proximalen Abschnitt (24) hin verjüngt.

5. Thermo-mechanische Depolymerisationsanlage (1) nach einem der vorstehenden Ansprüche, wobei die Zuführmittel (10) für das Polymergemisch Folgendes umfassen:
(i) einen ersten Behälter (30) für ein Polymermaterial;
(ii) einen zweiten Behälter (32) für einen anorganischen Füllstoff;
(iii) einen Mischer (34) für das Polymermaterial und den anorganischen Füllstoff zum Erhalten des Polymergemischs, wobei der Mischer fluidisch mit dem ersten Behälter (30) und dem zweiten Behälter (32) verbunden ist;
(iv) Fördermittel (36), bevorzugt mechanischer Art, des Polymergemischs von dem Mischer (34) zu dem Ringspalt (12).

6. Thermo-mechanische Depolymerisationsanlage (1) nach einem der vorstehenden Ansprüche, wobei der bewegliche Schieber eine im Wesentlichen konische oder kegelstumpfförmige Form aufweist.

7. Verfahren zur thermo-mechanischen Depolymerisation unter Verwendung einer thermo-mechanischen Depolymerisationsanlage (1) nach einem der vorstehenden Ansprüche, umfassend die folgenden Schritte:
- Zuführen eines Polymergemischs in Partikel- und/oder Granulatform zu dem mindestens einen Zylinder (2);
- Drehen der mindestens einen Förderschnecke (6) unter Verwendung der Antriebsmittel (8) mit einer einstellbaren Winkelgeschwindigkeit;
- Unterwerfen des Polymergemischs einer Depolymerisation durch thermomechanische Beanspruchungen in Abwesenheit von Sauerstoff in dem Ringspalt (12), um Depolymerisationsprodukte zu erhalten, wobei die Depolymerisationsprodukte feste, flüssige und/oder gasförmige Produkte in variablen Mengen umfassen;
- Ausleiten der Depolymerisationsprodukte durch die Auslassöffnung (14);
- Einstellen des Produktdurchtrittsquerschnitts durch die Abfangemittel (16) mittels eines von den Bewegungsmitteln (18) bewegten beweglichen Schiebers;
- Erfassen der Mengen an festen, flüssigen und/oder gasförmigen Produkten, die aus dem Ringspalt (12) austreten;
- Verwalten und Regeln der Antriebsmittel (8) und der Bewegungsmittel (18) durch Senden von Einstellsignalen an die Antriebsmittel (8) und/oder die Bewegungsmittel (18);
- Einstellen der Winkelgeschwindigkeit und/oder des Produktdurchtrittsquerschnitts entsprechend Detektionssignalen, die von den Erkennungsmitteln (22) empfangen werden, basierend auf tatsächlich erfassten Mengen der festen, flüssigen und/oder gasförmigen Produkte.

8. Thermo-mechanisches Depolymerisationsverfahren nach dem vorstehenden Anspruch, wobei das Polymergemisch ein Polymermaterial und einen anorganischen Füllstoff umfasst und der anorganische Füllstoff einen Zeolith in Pulverform umfasst oder daraus besteht, wobei der Zeolith ferner als Antiagglomerationsmittel für das Polymergemisch wirkt.

9. Thermo-mechanisches Depolymerisationsverfahren nach Anspruch 7 oder 8, wobei der anorganische Füllstoff in einer Menge von 0,1 bis 10 Gew.-%, bezogen auf das Gesamtgewicht des Polymergemischs, vorhanden ist, vorzugsweise in einer Menge von 0,2 bis 5 Gew.-%, besonders bevorzugt in einer Menge von 0,5 bis 3 Gew.-%.

10. Thermo-mechanisches Depolymerisationsverfahren nach einem der Ansprüche 7 bis 9, wobei das Polymergemisch in Partikel- und/oder Granulatform Partikel und/oder Granulat mit einer mittleren Größenverteilung von 0,5 mm bis 15 mm umfasst, vorzugsweise von 1 mm bis 10 mm, besonders bevorzugt von 2 mm bis 5 mm.

11. Thermo-mechanisches Depolymerisationsverfahren nach einem der Ansprüche 7 bis 10, wobei die Partikel und/oder das Granulat Folgendes umfassen oder daraus bestehen:
- geschredderte Reifen; und/oder
- Fahrzeugschredderrückstände (ASR).

## Revendications

1. Installation de dépolymérisation thermo-mécanique (1) comprenant :
- des moyens d'alimentation (10) d'un mélange polymère sous forme particulaire et/ou granulaire ;
- au moins un cylindre (2) s'étendant autour d'un axe longitudinal (X) de manière à délimiter un compartiment (4) de cylindre ;
- au moins une vis sans fin (6), reçue de manière rotative dans le compartiment (4) de cylindre et montée avec son axe de rotation (R1) de manière coaxiale à l'axe longitudinal (X) ;
- des moyens d'entraînement (8) pour entraîner ladite vis sans fin (6) autour dudit axe de rotation (R1) avec une vitesse angulaire réglable ;
dans laquelle ledit cylindre (2) et ladite vis sans fin (6) délimitent, entre eux, un espace annulaire (12) dans lequel ledit mélange polymère est soumis à une dépolymérisation par des contraintes thermo-mécaniques en l'absence d'oxygène pour obtenir des produits de dépolymérisation, dans laquelle lesdits produits de dépolymérisation comprennent des produits solides, liquides et/ou gazeux en quantités variables ;
- au moins une ouverture d'évacuation (14) desdits produits de dépolymérisation ;
- des moyens d'interception (16) desdits produits de dépolymérisation sortant de ladite ouverture d'évacuation (14) ; dans laquelle lesdits moyens d'interception (16) comprennent au moins un obturateur mobile pour régler une section de passage de produits à travers lesdits moyens d'interception (16) ;
- des moyens de déplacement (18) dudit obturateur mobile ;
- des moyens de détection (22) de quantités de produits solides, liquides et/ou gazeux sortant de l'espace annulaire (12) ;
- des moyens de gestion et de commande (20) reliés fonctionnellement auxdits moyens d'entraînement (8),
auxdits moyens de déplacement (18) et auxdits moyens de détection (22) de manière à envoyer des signaux de réglage :
(i) auxdits moyens d'entraînement (8) ; et/ou
(ii) auxdits moyens de déplacement (18) ;
pour régler ladite vitesse angulaire et/ou ladite section de passage de produits en fonction de signaux de détection reçus par les moyens de détection (22) sur la base de quantités effectivement détectées desdits produits solides, liquides et/ou gazeux ; dans laquelle le pas de la vis sans fin (6) au niveau de la section distale (28) est plus petit que le pas de la vis sans fin (6) au niveau de la section proximale (24).

2. Installation de dépolymérisation thermo-mécanique (1) selon la revendication précédente, dans laquelle lesdits signaux de réglage envoyés par les moyens de gestion et de commande (20) aux moyens d'entraînement (8) et aux moyens de déplacement (18) sont coordonnés de sorte que ladite section de passage de produits est augmentée ou diminuée d'une manière qui correspondant ou est proportionnelle à une augmentation ou une diminution de ladite vitesse angulaire, respectivement.

3. Installation de dépolymérisation thermo-mécanique (1) selon l'une quelconque des revendications précédentes, dans laquelle lesdits moyens de détection (22) de la quantité de produits solides, liquides et/ou gazeux comprennent ou consistent en :
- un ou plusieurs détecteurs du poids des produits solides ; et/ou
- un ou plusieurs détecteurs du volume, de l'écoulement et/ou de la densité des produits liquides ; et/ou
- un ou plusieurs détecteurs de l'écoulement et/ou de la pression des produits gazeux ; et/ou
- facultativement au moins un détecteur chromatographique en phase gazeuse ; et/ou
- facultativement au moins un ou plusieurs détecteurs de la température dudit mélange polymère et/ou desdits produits solides, liquides et/ou gazeux.

4. Installation de dépolymérisation thermo-mécanique (1) selon l'une quelconque des revendications précédentes, dans laquelle ladite vis sans fin (6) comprend une section proximale (24), une section intermédiaire (26) et une section distale (28), axialement adjacentes le long de l'axe longitudinal (X),
dans laquelle une première section de passage de l'espace annulaire (12) au niveau de la section proximale (24) est supérieure à une seconde section de passage de l'espace annulaire (12) au niveau de la section distale (28), et dans laquelle la section intermédiaire (26) a une forme tronconique effilée vers la section proximale (24).

5. Installation de dépolymérisation thermo-mécanique (1) selon l'une quelconque des revendications précédentes, dans laquelle lesdits moyens d'alimentation (10) du mélange polymère comprennent :
(i) un premier récipient (30) pour un matériau polymère ;
(ii) un second récipient (32) pour une charge inorganique ;
(iii) un mélangeur (34) pour ledit matériau polymère et ladite charge inorganique afin d'obtenir ledit mélange polymère, ledit mélangeur étant relié de manière fluidique avec ledit premier récipient (30) et ledit second récipient (32) ;
(iv) des moyens de convoyage (36), de préférence de type mécanique, du mélange polymère depuis ledit mélangeur (34) vers l'espace annulaire (12).

6. Installation de dépolymérisation thermo-mécanique (1) selon l'une quelconque des revendications précédentes, dans laquelle ledit obturateur mobile présente une forme sensiblement conique ou tronconique.

7. Procédé de dépolymérisation thermo-mécanique utilisant une installation de dépolymérisation thermo-mécanique (1) selon l'une quelconque des revendications précédentes, comprenant les étapes de :
- l'alimentation d'un mélange polymère sous forme particulaire et/ou granulaire dans ledit au moins un cylindre (2) ;
- la rotation de ladite au moins une vis sans fin (6) à l'aide des moyens d'entraînement (8) à une vitesse angulaire réglable ;
- le fait de soumettre le mélange polymère à une dépolymérisation par des contraintes thermo-mécaniques en l'absence d'oxygène dans l'espace annulaire (12) pour obtenir des produits de dépolymérisation, dans lequel lesdits produits de dépolymérisation comprennent des produits solides, liquides et/ou gazeux en quantités variables ;
- la décharge desdits produits de dépolymérisation à travers l'ouverture d'évacuation (14) ;
- le réglage de la section de passage de produits à travers les moyens d'interception (16) par l'intermédiaire d'un obturateur mobile déplacé par les moyens de déplacement (18) ;
- la détection des quantités de produits solides, liquides et/ou gazeux sortant de l'espace annulaire (12) ;
- la gestion et la commande des moyens d'entraînement (8) et des moyens de déplacement (18) par l'envoi de signaux de réglage auxdits moyens d'entraînement (8) et/ou auxdits moyens de déplacement (18) ;
- le réglage de la vitesse angulaire et/ou de la section de passage de produits en fonction de signaux de détection reçus par les moyens de détection (22) sur la base de quantités effectivement détectées desdits produits solides, liquides et/ou gazeux.

8. Procédé de dépolymérisation thermo-mécanique selon la revendication précédente, dans lequel ledit mélange polymère comprend un matériau polymère et une charge inorganique, et ladite charge inorganique comprend ou consiste en une zéolite sous forme de poudre, dans lequel ladite zéolite agit en outre comme agent anti-agglomérant pour ledit mélange polymère.

9. Procédé de dépolymérisation thermo-mécanique selon la revendication 7 ou revendication 8, dans lequel ladite charge inorganique est présente selon une quantité comprise entre 0,1 % et 10 % en poids par rapport au poids total dudit mélange polymère, de préférence comprise entre 0,2 % et 5 % en poids, plus préférablement comprise entre 0,5 % et 3 % en poids.

10. Procédé de dépolymérisation thermo-mécanique selon l'une quelconque des revendications 7 à 9, dans lequel ledit mélange polymère sous forme particulaire et/ou granulaire comprend des particules et/ou des granulés ayant une distribution de taille moyenne comprise entre 0,5 mm et 15 mm, de préférence comprise entre 1 mm et 10 mm, plus préférablement comprise entre 2 mm et 5 mm.

11. Procédé de dépolymérisation thermo-mécanique selon l'une quelconque des revendications 7 à 10, dans lequel lesdites particules et/ou lesdits granulés comprennent ou consistent en :
- des pneus déchiquetés ; et/ou
- des résidus de déchiquetage automobile (ASR).
